(19) Europäisches Patentamt
European Patent Office
Office européen des brevets

(11) EP 1 414 683 B1

(12) **EUROPÄISCHE PATENTSCHRIFT**

(45) Veröffentlichungstag und Bekanntmachung des Hinweises auf die Patenterteilung:
**14.09.2011 Patentblatt 2011/37**

(21) Anmeldenummer: **02760294.5**

(22) Anmeldetag: **30.07.2002**

(51) Int Cl.:
**B60T 8/172** $^{(2006.01)}$ **B60C 23/06** $^{(2006.01)}$

(86) Internationale Anmeldenummer:
**PCT/EP2002/008478**

(87) Internationale Veröffentlichungsnummer:
**WO 2003/016115 (27.02.2003 Gazette 2003/09)**

(54) **VERFAHREN ZUR BESTIMMUNG DER BELASTUNG EINES FAHRZEUGREIFENS**

METHOD FOR DETERMINING THE LOAD EXERTED ON A VEHICLE TIRE

PROCEDE DESTINE A DETERMINER LA CHARGE IMPOSEE A UN PNEUMATIQUE DE VEHICULE

(84) Benannte Vertragsstaaten:
**DE FR IT**

(30) Priorität: **30.07.2001 DE 10137029**

(43) Veröffentlichungstag der Anmeldung:
**06.05.2004 Patentblatt 2004/19**

(73) Patentinhaber:
• **Continental Teves AG & Co. oHG**
  **60488 Frankfurt am Main (DE)**
• **Continental AG**
  **30165 Hannover (DE)**

(72) Erfinder:
• **GRIESSER, Dr. Martin**
  **65760 Eschborn (DE)**
• **KÖBE, Andreas**
  **64625 Bensheim (DE)**
• **SÄGER, Peter**
  **61381 Friedrichrichsdorf (DE)**
• **KELLER, Lothar**
  **61381 Friedrichsdorf (DE)**

(56) Entgegenhaltungen:
EP-A- 0 719 663    DE-A- 4 009 540
DE-A- 4 228 894    DE-A- 10 058 099
DE-A- 19 611 364   DE-A- 19 807 880
DE-C- 19 917 034

• **PATENT ABSTRACTS OF JAPAN vol. 018, no. 398 (M-1645), 26. Juli 1994 (1994-07-26) & JP 06 115328 A (NIPPONDENSO CO LTD), 26. April 1994 (1994-04-26)**
• **PATENT ABSTRACTS OF JAPAN vol. 015, no. 346 (M-1153), 3. September 1991 (1991-09-03) & JP 03 135810 A (MITSUBISHI MOTORS CORP), 10. Juni 1991 (1991-06-10)**

**Beschreibung**

Die Erfindung betrifft ein Verfahren zur Bestimmung der Auslastung oder Belastung der Reifen eines Kraftfahrzeugs.

Es ist bereits bekannt, in Kraftfahrzeugen den Reifendruck oder eine Größe, die das Absinken des Reifendrucks wiedergibt, mittels drucksensorbasierender Druckmesssysteme (TPMS = Tire Pressure Measuring System) oder, ohne Verwendung von Drucksensoren, mittels auf der Raddrehzahl basierender Systeme (DDS = Deflation Detecting System) zu bestimmen.

Bei dem sogenannten TPMS-System wird der gemessene Druck gemeinsam mit der Temperatur mit Hilfe von im Reifen angeordneten Sensoren erfasst und drahtlos zu einem im Fahrzeug installierten Empfänger übertragen. In einem Steuergerät werden die Druckinformationen ausgewertet und der in den einzelnen Reifen herrschende Druck bestimmt.

Für die üblicherweise verwendeten Sicherheits- und Kraftfahrzeugregelungssysteme, wie ABS, ASR, ESP, DDS etc., ist ohnehin eine relativ genaue Kenntnis des Drehverhaltens der einzelnen Fahrzeugräder erforderlich. Heutzutage sind daher die Fahrzeuge mit passiven oder aktiven Raddrehzahlsensoren ausgerüstet, welche die benötigten Eingangssignale für die diversen Sicherheits- und Regelungssysteme liefern. So wird beispielsweise mit Hilfe des DDS (Deflation Detecting System) der Reifendruck, der aus den Raddrehzahlen nicht direkt ableitbar ist, mittelbar über den dynamischen Abrollumfang der einzelnen Fahrzeugräder erfasst. Die Lastabhängigkeit des dynamischen Abrollumfangs ist bei der Druckverlusterkennung mit Hilfe des DDS eher als Störgröße anzusehen.

In der Schrift DE 198 07 880 A1 wird ein Verfahren zur Bestimmung des Reifenluftdrucks von Rädern eines Kraftfahrzeugs offenbart, in welchem erfasste Reifenumfangskraft-Schlupf-Meßwertpaare berücksichtigt werden.

Eine Vorrichtung zur Abschätzung des Reifendrucks aus Vibrationskomponenten, welche sich aus der Analyse von Raddrehzahlsignalen ergeben, wird in der EP 0 719 663 A1 beschrieben. Dabei wird ausgehend von einem aus Vibrationskomponenten abgeschätzten Reifendruck unter Verwendung von Raddrehzahlsignalen auf den Reifendruck eines anderen Rades geschlossen.

Die Überwachung auf Reifendruckverlust genügt nicht, da die Auslastung oder Belastung des Reifens, mehr noch als der Reifendruck, für die Sicherheit und für die Haltbarkeit des Reifens verantwortlich ist und da je nach Radlast oder Radlastverteilung unterschiedliche Reifendrücke für ein komfortables Fahrverhalten und ideale Auslastung des Reifens erforderlich sind.

In der Schrift DE 196 11 364 A1 wird eine Vorrichtung zur Fahrzeugreifenüberwachung offenbart, in welcher die Reifenbelastung erfasst wird. Dabei werden u.a. der Reifendruck, die Reifentemperatur und die Fahrzeugbeladung direkt gemessen, wozu jedoch entsprechende, unterschiedliche Sensoren notwendig sind.

Der vorliegenden Erfindung liegt daher die Aufgabe zugrunde, ein alternatives Verfahren zu schaffen, das ein Erkennen der Auslastung oder Belastung eines Reifens bei unterschiedlichen Bedingungen, insbesondere bei unterschiedlicher Radlast oder Radlastverteilung, zulässt.

Mit einem solchen Verfahren ist es möglich, eine Überlastung der Reifen auszuschließen, die Haltbarkeit der Reifen zu gewährleisten, und die allgemeine Sicherheit von Fahrzeug und Fahrer zu erhöhen.

Es hat sich nun herausgestellt, dass diese Aufgabe mit dem im Anspruch 1 beschriebenen Verfahren gelöst werden kann. Die für eine bestimmte Auslastung oder Belastung, z.B. Teillast oder Volllast, geltenden Sollwerte oder Normalwerte der Lastverteilungs-Kenngrößen können manuell eingegeben werden, oder man kann das System so auslegen, dass die entsprechenden Soll- oder Normalwerte selbsttätig erkannt werden, sobald bestimmte vorgegebene Bedingungen erfüllt sind.

Die Erfindung beruht auf der Erkenntnis, dass die die Sicherheit und Lebensdauer eines Reifens in hohem Masse beeinflussende Größe, nämlich die Auslastung des Reifens, durch Druckmessung und Beobachtung des Raddrehverhaltens bestimmt werden kann. Die Abhängigkeit des dynamischen Abrollumfangs vom Reifendruck und der Radlast ist z.B. aus der Entwicklung von raddrehzahlbasierten Drucküberwachungssystemen (DDS) bekannt. Durch Vergleich der Raddrehzahlen der verschiedenen Fahrzeugräder und Auswertung der Abweichungen lassen sich Kenngrößen ermitteln, die bei Kenntnis des Reifendrucks - gemessen z.B. durch TPMS - die Auslastung der Reifen wiedergeben.

Nach einem Ausführungsbeispiel der Erfindung werden zur Ermittlung des Reifendrucks ein auf Drucksensorik basierendes Druckmesssystem (wie TPMS = Tire Pressure Measuring System), zur Beobachtung des Raddrehverhaltens Radrehzahlsensoren sowie zur Bestimmung der Lastverteilungs-Kenngrößen ein auf Auswertung der Radrehzahlinformationen basierendes System, das in der Funktionsweise einem System (DDS) zur Ermittlung der Verhältnisse der dynamischen Abrollumfänge der einzelnen Reifen gleicht, verwendet. Man greift also zur Verwirklichung der Auslastungserkennung auf bekannte Systeme zurück.

Nach einer weiteren vorteilhaften Ausführungsart der Erfindung wird die Drehzahl eines Vorderrades mit der Drehzahl eines Hinterrades bei gleicher Fahrzeuggeschwindigkeit oder näherungsweise gleicher Fahrzeuggeschwindigkeit (z.B. Fahrzeugreferenzgeschwindigkeit) verglichen, zum Bilden einer Lastverteilungs-Kenngröße ausgewertet und der Wert und/oder die Änderung der Lastverteilungs-Kenngrößen in definierten Fahrsituationen zur Berechnung der Auslastung oder Belastung der Reifen herangezogen.

Dabei hat es sich als besonders zweckmäßig erwiesen, zum Bestimmen der Lastverteilungs-Kenngrößen jeweils einen Quotienten aus der Vorderrad- und der Hinterradgeschwindigkeit der Räder (oder der entsprechenden Drehzahlen) der gleichen Fahrzeugseite zu bilden und den Wert und/oder die Änderungen der Lastverteilungs-Kenngrößen bei (näherungsweise) gleicher Fahrzuggeschwindigkeit bzw. unter Berücksichtigung der Fahrzeuggeschwindigkeit auszuwerten. Die Quotienten $V_{VL}/V_{HL}$ oder $V_{VR}/V_{HR}$, die zur Erhöhung der "Sicherheit" des Erkennens und Genauigkeit zusätzlich miteinander verknüpft werden können, sind geeignete Größen zur Bestimmung der Lastverteilung. Andersartige Verknüpfungen, z.B. der Diagonalen, oder entsprechende andersartige funktionale Zusammenhänge, wie insbesondere Quotienten von Geschwindigkeitssummen, sind ebenfalls möglich; dies ist von der jeweiligen Auslegung der Fahrzeuge und der Überwachungssysteme abhängig.

Weiterhin ist vorgesehen, dass zum Erkennen von relativen Lastverteilungsänderungen senkrecht zur Fahrtrichtung - beispielsweise durch Zusteigen eines Beifahrers - jeweils die Geschwindigkeiten der Räder einer Achse verglichen und bewertet werden.

Zur Erhöhung der Mess- und Auswertegenauigkeit ist es durchaus auch möglich oder sogar vorzuziehen, die Abrollzeiten der Räder anstelle der Raddrehzahlen oder Radgeschwindigkeiten den Berechnungen zugrunde zu legen.

Ferner hat es sich als zweckmäßig erwiesen, in definierten Fahrsituationen, z.B. bei, (zumindest näherungsweise) frei rollenden Rädern, bei konstanter Geradeausfahrt etc. oder unter Einbeziehung des Antriebsmomentes in die Berechnungen durch statistische Betrachtungen oder durch Auswerten von Kriterien, die auf einen Teillastbetrieb hinweisen, die für den Teillastbetrieb geltenden Werte für die Lastverteilungs-Kenngrößen zu ermitteln. Obwohl Kenngrößen, die in freirollenden Fahrsituationen gewonnen werden, im allgemeinen genauer sind und daher bevorzugt ausgewertet werden können, ist es häufig aus Gründen einer in der Praxis beschränkten Anzahl von Daten zusätzlich zweckmäßig, auch Daten von nicht freirollenden Fahrsituationenen miteinzubeziehen. In den letztgenannten Fällen müssen die gewonnen Daten von dem Einfluss des jeweiligen Fahrparameters auf die Kenngröße bereinigt werden.

Die erforderlichen Informationen zur Ermittlung der Fahrsituation werden bevorzugt aus einem an sich bekannten ABS- oder ESP-System gewonnen.

Der Zeitpunkt, an dem ein Normalzustand, d.h. ein definierter Zustand oder Sollzustand, vorliegt, kann erfindungsgemäß durch manuelles oder selbsttätiges Auslösen eines Startsignals, z.B. nach der Einstellung eines vorgegeben Luftdrucks und Beladungszustandes, festgelegt werden. Nach einem Reifenwechsel oder nach der Erstmontage wird man in vielen Fällen nicht umhin können, einen Reset-Vorgang oder ein Startsignal manuell auszulösen.

Nach einer weiteren Ausführungsart des erfindungsgemäßen Verfahrens werden Werte für die Lastverteilungs-Kenngrößen und die zugehörigen Reifendruckwerte während vorgegebener Fahrzustände gelernt und gespeichert. Diese gelernten Kenngrößen können insbesondere auch in Abhängigkeit eines Fahrparameters, wie z.B. in Abhängigkeit von der Geschwindigkeit, ermittelt sein. Im letztgenanten Fall ist es besonders zweckmäßig, wenn aufeinanderfolgende Intervalle für den Fahrparameter gebildet werden und für jedes Intervall ein Lernwert ermittelt wird.

Lernprozesse werden bevorzugt auch für das auf Auswertung der Raddrehzahlinformationen basierende System angewendet. Speziell wird in einer Lernphase der Soll- oder Normalzustand, insbesondere durch Ermitteln und Speicherung von Größen, die den Abrollumfang der Räder wiedergeben, eingelernt. Die Größen, die den Abrollumfang der Räder wiedergeben, können auch Verhältnisgrößen unterschiedlicher Radpaarungen sein. Je nach Anwendungsfall können die Verhältnisgrößen natürlich auch durch andersartige Berechnungen oder andersartigen Vergleich der einzelnen Räder bestimmt werden.

Nach einer weiteren bevorzugten Ausführungsform der Erfindung ermittelt das auf Auswertung der Raddrehzahlinformationen basierende System nach der Lernphase Änderungen der Größen, die den Abrollumfang der Räder wiedergeben, durch Vergleich von aktuellen Kenngrößen, die den Abrollumfang der Räder wiedergeben, mit eingelernten Größen, die den Abrollumfang der Räder darstellen. Die Differenz zwischen der eingelernten Größe und der aktuellen Größe ist in diesem Fall ein Maß für die Radlast.

Das auf Auswertung der Raddrehzahlinformationen basierende System kann mit geringem Aufwand zu einem vollständigen DDS, d.h. eines Systems, das in der Lage ist, unabhängig von dem Druckmesssystem (TPMS) einen Reifendruckverlust zu erkennen, erweitert werden. Bei diesem System kann ein Vergleich des Reifendruckverlustes, der mit der Drucksensorik (TPMS) bestimmt wurde, mit dem Reifendruckverlust, der auf Basis des DDS-Systems ermittelt wurde, vorgenommen und ausgewertet werden. Wenn der auf Basis der Raddrehzahlinformationen ermittelte Reifendruckverlust um ein bestimmtes Maß größer ist als der auf Basis der Drucksensorik festgestellte Reifendruckverlust, lässt dies auf eine durch Erhöhung der Radlast ausgelöste Einfederung schließen.

Weitere Merkmale, Vorteile und Anwendungsmöglichkeiten der Erfindung sind den folgenden Erläuterungen an Hand der beigefügten Abbildungen zu entnehmen. Es zeigen:

Fig. 1    in schematischer Darstellung ein Ablaufdiagramm zur Veranschaulichung des Grundprinzips eines Ausführungsbeispiels des erfindungsgemäßen Verfahrens,

Fig. 2    im Diagramm die Abhängigkeit einer Lastverteilungs- Kenngröße von der Zuladung,

Fig. 3    in gleicher Darstellungsweise wie Fig. 2 ein Dia- gramm zur Erläuterung der Erkennung des Teillastzu- standes und

Fig. 4    mehrere Diagramme zur Veranschaulichung des Prin- zips der Auslastungserkennung am Beispiel eines Fahrzeugs, dessen Zuladung im wesentlichen die Hin- terachse belastet.

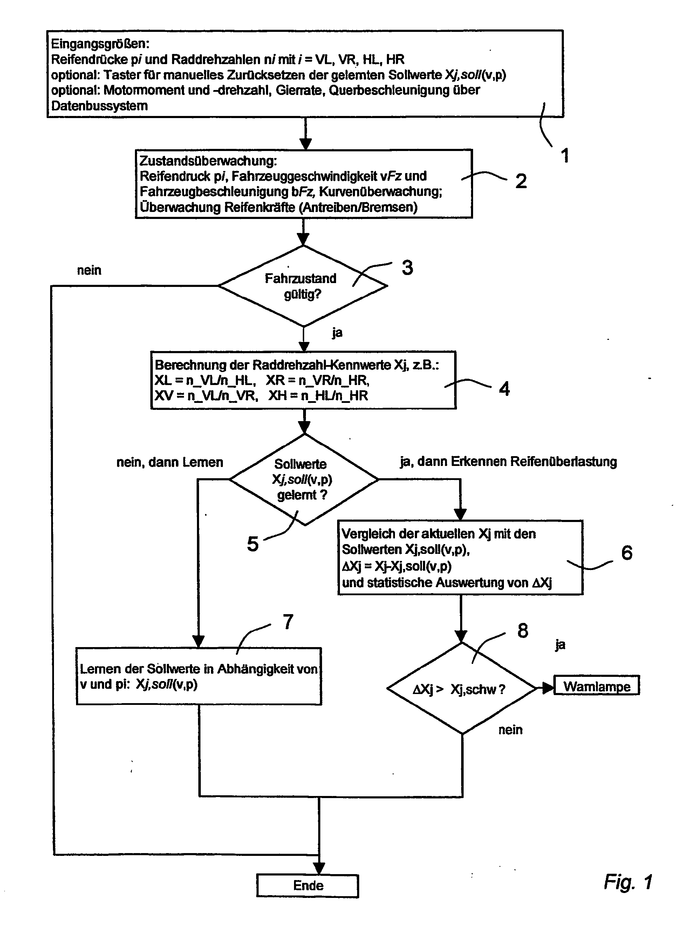

Figur 1 dient zur Veranschaulichung der Funktionsweise des erfindungsgemäßen Verfahrens. Das Verfahren beruht auf der Auswertung des individuellen Reifendrucks $p_i$ (der Index i= 1...4 bezeichnet das jeweilige Rad) und des Drehverhaltens oder der Raddrehzahlen VL, VR, HL und HR als Eingangsgrößen eines Systems zur Durchführung des Verfahrens nach der Erfindung. Dies symbolisiert Block 1.
In Block 2 wird in dem hier beschriebenen Ausführungsbeispiel der aktuelle Zustand der Reifen (Druck), der Räder (Drehverhalten) und des Fahrzeugs (Beschleunigung, Fahrsituation etc.) und Änderungen dieser Größen ermittelt und überwacht.
Nach einer "Abfrage" des aktuellen Fahrzustandes in Schritt 3 werden Raddrehzahl-Kennwerte (in diesem Beispiel werden Raddrehzahlen "n" anstelle von Radgeschwindigkeiten "v" miteinander verglichen) wie angegeben errechnet und anschließend in 5 überprüft.
Das Lernen der Sollwerte wird fortgesetzt (symbolisiert durch 7), oder es wird, wenn eine Reifenüberlastung erkannt wurde (Alternative "ja" der Verzweigung 5), nach dem Vergleich der aktuellen Werte mit den Sollwerten im Operator 6 und Überschreiten einer vorgegebenen Schwelle (Verzweigung 8) eine Warnfunktion ausgelöst bzw. eine Warnlampe eingeschaltet.
Die einzelnen Vorgänge und Entscheidungen im Ablauf des erfindungsgemäßen Verfahrens sind in Fig. 1 in den zuvor erläuterten Schritten 1-8 genannt.

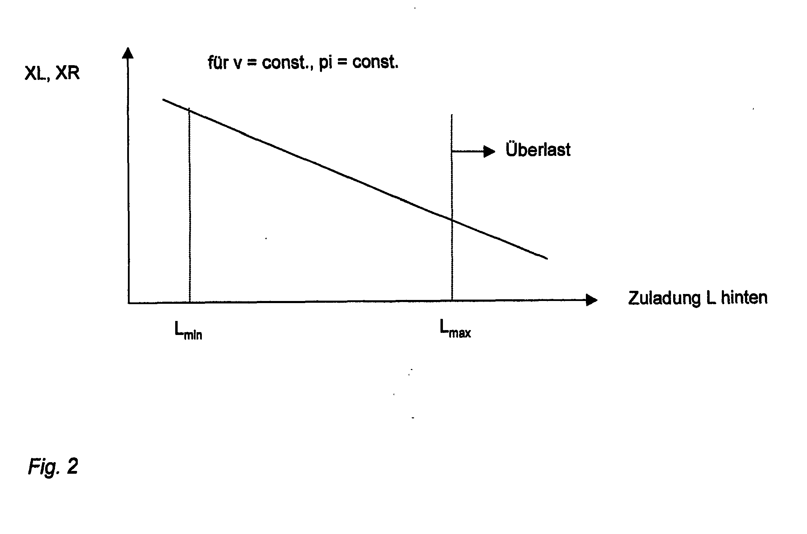

Fig. 2 zeigt den Verlauf oder die Abhängigkeit von Kenngrößen XL, XR von der Zuladung (Zuladung L hinten); es handelt sich hier um ein Fahrzeug, bei dem durch die Zuladung die Last auf der Hinterachse erhöht wird.
Zur Bestimmung der Lastverteilungs-Kenngrößen XL und XR werden beispielsweise die Drehzahlen oder Geschwindigkeiten der Räder jeweils einer Fahrzeugseite herangezogen. Danach gilt:

$$XL = V_{VL}/V_{HL} \qquad und \quad XR = V_{VR}/V_{HR}$$

Die Kennlinie XL, XR = f(Zuladung L hinten) nach Fig. 2 gilt für eine konstante Fahrzeuggeschwindigkeit v und konstantem Druck in den einzelnen Reifen. $L_{min}$ ist der Lastzustand mit der geringst möglichen Auslastung (nur Fahrer, keine Zusatzlast)und $L_{max}$ der Lastzustand, ab dem eine Warnanzeige erfolgt.

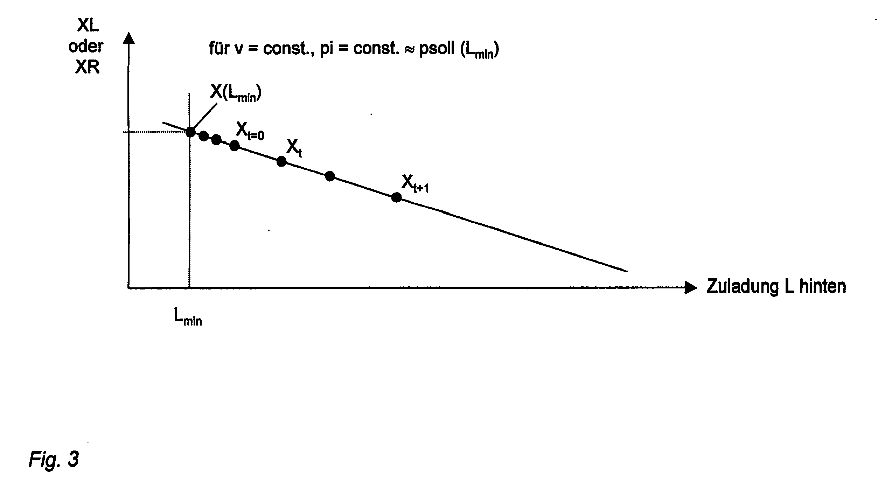

Fig. 3 dient zur Veranschaulichung der Lernprozesse der Kenngrößen XL und XR für den Mindestlastzustand eines Fahrzeugs, das im wesentlichen hinten beladen wird. Die Lastverteilungs-Kenngrößen $XL_t$, $XR_t$, $XV_t$ und $XH_t$ werden zu verschiedenen Zeitpunkten zusammen mit den zugehörigen Druckwerten erfasst, gespeichert und statistisch ausgewertet. Es ist davon auszugehen, dass der Zustand bei Teillast oder Minimallast im Betrieb eines Fahrzeugs wiederholt auftritt, weshalb der Wert der entsprechenden Lastverteilungs-Kenngröße durch statistische Auswertung oder Schlussfolgerung zu erkennen ist.
Im dargestellten Beispiel werden für jeden Zündungslauf des Fahrzeugs (Zeit zwischen Starten des Motors und Abstellen des Motors) jeweils Kenngrößen $XL_t$, $XR_t$, $XV_t$ und $XH_t$ ermittelt. Neben den Kenngrößen wird jeweils auch der dazugehörige Reifendruck $p_i$ gespeichert. Mit der vereinfachenden Annahme, dass das Fahrzeug bei mehreren Zündungsläufen auch unbeladen (nur Fahrer ohne Zusatzlast) betrieben wird, kann ein Sollwert $X_{Soll}$ auf besonders einfache Weise über eine Maximumfunktion aus den Werte $X_t$ bestimmt werden.

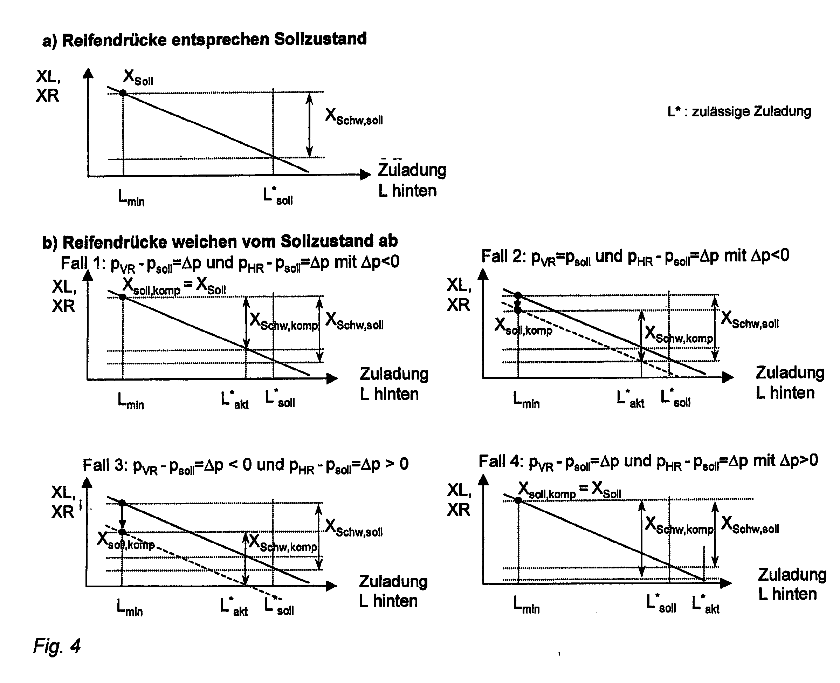

Fig. 4 dient zur Erläuterung der Auslastungserkennung und der entsprechenden Lastverteilungs-Kenngrößen in verschiedenen Situationen und bei unterschiedlichem Reifendruck. Die jeweils geltenden Randbedingungen sind in Fig. 4 genannt.
In Teilbild unter a) von Fig. 4 ist eine Erkennungsschwelle $X_{Schw,Soll}$ vorgesehehen, welche zunächst unkompensiert bleiben kann, da der Reifendruck aller Räder dem Solldruck innerhalb der notwendigen Genauigkeit entspricht. Wird die Erkennungsschwelle überschritten, erzeugt das System eine Warnung. In den Teilbildern unter b) sind Situationen dargestellt, in denen eines oder mehrere Räder einen geringeren Druck $\Delta p<0$ aufweist. Da ein Rad mit Minderdruck nicht mehr so stark ausgelastet werden kann, wie ein den Solldruck aufweisendes Rad, muss die Erkennungsschwelle zu $X_{Schw,komp}$ druckabhängig zu niedrigeren Werten hin kompensiert werden. Dabei ist es sinnvoll, die Anpassung nach dem niedrigsten Druck je Fahrzeugseite vorzunehmen. Hierdurch wird die Auslastungswarnung einer zu hohen Auslastung bereits bei einer geringeren Last aktiviert. In den dargestellten Fällen 2 und 3 weichen die Reifendrücke der zur Ermittlung von X verwendeten Räder voneinander ab, so dass auch eine Kompensation von $X_{Soll}$ zu $X_{Soll,komp}$ erforderlich ist.

Die zuvor beschriebene druckabhängige Kompensation der Erkennungsschwellen ist abhängig vom verwendeten Reifentyp. Es hat sich gezeigt, dass eine Kompensation mit ausreichender Genauigkeit bevorzugt mit Hilfe von fahrzeugtypabhängigen Konstanten durchgeführt werden kann. Dies ist möglich, da bei einem bestimmten Fahrzeugtyp in der Regel lediglich bestimmte bekannte Reifentypen zum Betrieb des Fahrzeugs zugelassen sind.

Ein auf Druckmessung basierendes Verfahren (TPMS) hat prinzipiell den Nachteil, dass dem Fahrer nur eine Druckinformation zur Verfügung gestellt werden kann. In wie fern der Reifen ausgelastet ist, hängt jedoch nicht allein vom Druck ab, sondern auch von der aktuellen Last, die unbekannt ist. Der Fahrer muss deshalb weiterhin eigenverantwortlich für den korrekten, zur Last gehörigen Luftdruck sorgen. Zwar kann häufig mittels der zumeist gleichzeitig durchgeführten Temperaturmessung im TPMS-Sensor auf Reifenüberlastungen geschlossen werden. Jedoch unterliegt die Temperatur im Sensor auf der Felge zahlreichen Störeinflüssen. Diese Messungen geben daher nicht mit ausreichender Sicherheit die Temperaturbelastung des Reifens (an den kritischen Positionen) wieder.

Ein DDS hat von Hause aus den Nachteil, dass der absolute Reifendruck unbekannt ist. Es hat jedoch den Vorteil, dass eine durch die veränderte Einfederung eines Reifens hervorgerufene Abrollumfangsänderung erkannt werden kann. Diese Einfederung des Reifens ist als das ausschlaggebende Maß für die Auslastung des Reifens anzusehen. In der Praxis kann mit DDS nicht unterschieden werden, ob eine Änderung der Einfederung über einen veränderten Luftdruck oder eine veränderte Radlast hervorgerufen wird. Hauptstörgröße bei einer Reifendruckkontrolle über DDS ist demnach die Last.

Mit dem erfindungsgemäßen Verfahren werden sowohl die Nachteile eines bekannten TPMS als auch Unzulänglichkeiten eines DDS überwunden. Das Verfahren nach der Erfindung beruht auf der Kombination einer auf Drucksensorik basierenden Messmethode mit einem auf Beobachtung und Auswertung der Raddrehzahlen beruhenden Verfahren, dessen physikalischen Grundlagen auf die dynamische Abrollumfänge der einzelnen Reifen und auf die relativen Änderungen dieser Abrollumfänge bei Radlaständerungen beruhen.

Über die Drucksensorik wird der Luftdruck exakt erkannt. Aus dem Raddrehverhalten wird die Auslastung des Reifens aufgrund von Druck- und Lastvariationen überwacht. Diese Kombination bietet damit die Möglichkeit, die Reifenauslastung bestimmen zu können. Dem Fahrer kann damit weitgehend die Verantwortung über den Reifen abgenommen werden. Gegenüber einem reinen drucksensorbasierenden Druckmesssystem, wie TPMS, bietet die erfindungsgemäße Lösung zudem den Vorteil, dass sich das System an Lastvariationen selbst adaptieren kann, d.h. der Fahrer muss dem TPMS nicht mitteilen, dass beladungsabhängig ein neuer Drucksollwert gilt.

Das erfindungsgemäße Verfahren nutzt in analoger Weise Funktionen und Erkenntnisse, die im Zusammenhang mit Druckverlusterkennungsverfahren, die auf Basis von Daten der Raddrehzahlsensoren arbeiten, gewonnen wurden.

Der "Normalzustand", d.h. der zum aktuellen (über TPMS bekannten) Beladungszustand korrekt eingestellte Luftdruck kann dem System z.B. per Tasterdruck vom Fahrer mitgeteilt werden oder z.B. entsprechend dem Beispiel in Fig. 3 mittels einer Maximalfunktion ohne Zutun des Fahrers ermittelt werden. Analog zum DDS werden die Abrollumfänge zunächst in einer Lernphase ermittelt. Danach, nach der Lernphase, wird der Istzustand mit dem eingelernten Zustand verglichen. Dieser Vergleich liefert Informationen über erhöhte Einfederungen und/oder Auslastungen des Reifens; das rechnerische Vorgehen ist in mancher Hinsicht analog zur Erkennung eines Druckverlusts über DDS. Die Entscheidung über die Warnung des Fahrers vor einer Überlastung des Reifens wird durch die kombinierte Bewertung von aktuellem Luftdruck und Einfederung getroffen.

Die Erfindung beinhaltet ein Verfahren zur Bestimmung oder Überwachung der Reifenauslastung auf Basis einer Kombination eines direkt messenden Reifenluftdruckkontrollsystems (TPMS) und eines Systems zur Beobachtung des Raddrehverhaltens und der Reifenabrollumfänge analog DDS.

Vorzugsweise wird das Verfahren in einem Kraftfahrzeug, insbesondere Personenkraftfahrzeug, durchgeführt.

**Patentansprüche**

1. Verfahren zur Bestimmung der Auslastung oder Belastung des Reifens eines Kraftfahrzeugs, wobei während des Betriebs des Fahrzeugs der Druck in den einzelnen Reifen (pi) ermittelt wird,
   **dadurch gekennzeichnet,**

   - **dass** das Drehzahlverhalten (ni) der einzelnen Räder beobachtet wird sowie
   - **dass** durch Vergleich des Drehzahlverhaltens und/oder der Änderungen des Drehzahlverhaltens der einzelnen Räder in bestimmten Fahrzuständen unter Berücksichtigung von voreingestellten und/oder gelernten Größen Lastverteilungs-Kenngrößen (Xj) bestimmt werden, welche Quotienten aus Raddrehzahlen oder Radgeschwindigkeiten sind, und

- **dass** schließlich aus dem Reifendruck (pi), den Lastverteilungs-Kenngrößen (Xj) und den für eine bestimmte Auslastung oder Belastung, z.B. Teillast oder Volllast, geltenden Sollwerten oder Normalwerten der Lastverteilungs-Kenngrößen (Xj, soll), welche manuell eingegeben oder, sobald vorgegebene Bedingungen erfüllt werden, selbsttätig erkannt werden, auf die Auslastung oder Belastung der Reifen geschlossen wird.

2. Verfahren nach Anspruch 1, **dadurch gekennzeichnet, dass** zur Ermittlung des Reifendrucks (pi) ein auf Drucksensorik basierendes Druckmesssystem (TPMS) und zur Beobachtung des Raddrehzahlverhaltens (ni) Raddrehzahlsensoren sowie zur Bestimmung der Lastverteilungs-Kenngrößen (Xj) ein auf Auswertung der Raddrehzahlinformationen basierendes System, das in der Funktions-weise einem DDS-System (DDS) zur Ermittlung der Verhältnisse der dynamischen Abrollumfänge der einzelnen Reifen gleicht, verwendet werden.

3. Verfahren nach Anspruch 1 oder 2, **dadurch gekennzeichnet, dass** die Drehzahl eines Vorderrades (n_VL, n_VR) mit der Drehzahl eines Hinterrades (n_HL, n_HR) bei gleicher Fahrzeuggeschwindigkeit oder näherungsweise gleicher Fahrzeuggeschwindigkeit verglichen und zum Bilden einer Lastverteilungs-Kenngröße (Xj) ausgewertet wird, und dass der Wert und/oder die Änderung der Lastverteilungs-Kenngrößen (Xj) in definierten Fahrsituationen zur Berechnung der Auslastung oder Belastung der Reifen herangezogen wird.

4. Verfahren nach Anspruch 3, **dadurch gekennzeichnet, dass** zum Bestimmen der Lastverteilungs-Kenngrößen (Xj) jeweils ein Quotient aus der Vorderrad- und der Hinterradgeschwindigkeit der Räder der gleichen Fahrzeugseite ($V_{VL}/V_{HL}$; $V_{VR}/V_{HR}$) gebildet wird und dass der Wert und/oder die Änderungen der Lastverteilungs-Kenngrößen bei gleicher Fahrzeuggeschwindigkeit (vFZ) bzw. unter Berücksichtigung von mindestens einem Fahrparameter, wie insbesondere der Fahrzeuggeschwindigkeit, ausgewertet werden.

5. Verfahren nach Anspruch 4, **dadurch gekennzeichnet, dass** zum Erkennen von relativen Lastverteilungsänderungen senkrecht zur Fahrtrichtung jeweils die Geschwindigkeiten der Räder einer Achse ($V_{VL}/V_{VR}$; $V_{HL}/V_{HR}$) verglichen und bewertet werden.

6. Verfahren nach Anspruch 4, **dadurch gekennzeichnet, dass** als Fahrparameter die Geschwindigkeit und/oder der Reifendruck- und/oder das Radmoment berücksichtigt wird.

7. Verfahren nach einem oder mehreren der Ansprüche 1 bis 6, **dadurch gekennzeichnet, dass** in definierten Fahrsituationen, wie bei zumindest näherungsweise frei rollenden Rädern oder unter Berücksichtigung des Antriebsmomentes, durch statistische Betrachtungen und/oder durch Auswerten von Kriterien, die auf einen Teillastbetrieb hinweisen, die für den Teillastbetrieb geltenden Werte für die Lastverteilungs-Kenngrößen ermittelt werden.

8. Verfahren nach mindestens einem der Ansprüche 1 bis 7, **dadurch gekennzeichnet, dass** der Zeitpunkt, an dem ein Normalzustand, d.h. ein definierter Zustand oder Sollzustand, vorliegt, durch manuelles oder selbsttätiges Auslösen eines Startsignals, z.B. nach der Einstellung eines vorgegeben Luftdrucks und Beladungszustandes, festgelegt wird.

9. Verfahren nach mindestens einem der Ansprüche 4 bis 8, **dadurch gekennzeichnet, dass** Werte für die Lastverteilungs-Kenngrößen und die zugehörigen Reifendruckwerte während vorgegebener Fahrzustände, wie Geradeausfahrt, freirollende Räder etc., gelernt und gespeichert werden.

10. Verfahren nach Anspruch 2, **dadurch gekennzeichnet, dass** das auf Auswertung der Radrehzahlinformationen basierende System in einer Lernphase den Soll- oder Normalzustand, insbesondere durch Ermitteln und Speicherung von Größen, die den Abrollumfang der Räder wiedergeben, einlernt.

11. Verfahren nach Anspruch 10, **dadurch gekennzeichnet, dass** die Größen, die den Abrollumfang der Räder wiedergeben, Verhältnisgrößen unterschiedlicher Radpaarungen sind.

12. Verfahren nach Anspruch 10 oder 11, **dadurch gekennzeichnet, dass** das auf Auswertung der Radrehzahlinformationen basierende System nach der Lernphase Änderungen der Größen, die den Abrollumfang der Räder wiedergeben, durch Vergleich von aktuellen Kenngrößen, die den Abrollumfang der Räder wiedergeben, mit eingelernten Größen, die den Abrollumfang der Räder darstellen, ermittelt.

13. Verfahren nach Anspruch 12, **dadurch gekennzeichnet, dass** die Differenz zwischen der eingelernten Größe und der aktuellen Größe ein Maß für die Radlast ist.

14. Verfahren nach Anspruch 2, **dadurch gekennzeichnet, dass** das auf Auswertung der Radrehzahlinformationen basierende System ein vollständiges DDS-System ist, das unabhängig von dem Druckmesssystem (TPMS) Reifendruckverlust erkennt.

15. Verfahren nach Anspruch 14, **dadurch gekennzeichnet, dass** ein Vergleich des Reifendruckverlustes, der mit der Drucksensorik (TPMS) bestimmt wurde, mit dem Reifendruckverlust, der auf Basis des DDS-Systems ermittelt wurde, vorgenommen und ausgewertet wird.

16. Verfahren nach Anspruch 14 oder 15, **dadurch gekennzeichnet, dass** auf eine durch Erhöhung der Radlast ausgelöste Einfederung erkannt wird, wenn der auf Basis der Raddrehzahlinformationen ermittelte Reifendruckverlust um ein bestimmtes Maß größer ist als der auf Basis der Drucksensoren (TPMS) festgestellte Reifendruckverlust.

17. Verfahren nach Anspruch 1 oder 3, **dadurch gekennzeichnet, dass** zusätzlich zur Bestimmung der Auslastung oder Belastung der Reifen eine Überwachung des Reifendrucks der Reifen durchgeführt wird, wobei aus dem Reifendruck und den Lastverteilungs-Kenngrößen auf Druckverlust geschlossen wird.

**Claims**

1. Method for determining the load exerted on the tyre of a motor vehicle, wherein the pressure in the individual tyres (pi) is determined during the operation of the vehicle, **characterized**

   - **in that** the rotational speed behaviour (ni) of the individual wheels is observed, and
   - **in that**, by comparing the rotational speed behaviour and/or the changes in the rotational speed behaviour of the individual wheels in specific driving states while taking into account preset and/or learnt variables, load distribution characteristic variables (Xj) are determined which are quotients of the wheel speeds, and
   - **in that**, finally, the load exerted on the tyres is inferred from the tyre pressure (pi), the load distribution characteristic variables (Xj) and the setpoint values or normal values of the load distribution characteristic variables (Xj, set), which setpoint values or normal values apply for a specific load, for example partial load or full load, and are input manually or are detected automatically as soon as predefined conditions are met.

2. Method according to Claim 1, **characterized in that** the pressure-measuring system (TPMS) which is based on a pressure sensor system to determine the tyre pressure (pi), and to observe the wheel speed behaviour (ni), and a system which is based on the evaluation of the wheel speed information, and is similar in its method of functioning to a DDS system (DDS) for determining the ratios of the dynamic rolling circumferences of the individual tyres, is used to determine the load distribution characteristic variables (Xj).

3. Method according to Claim 1 or 2, **characterized in that** the rotational speed of a front wheel (n_VL, n_VR) is compared with the rotational speed of a rear wheel (n_HL, n_HR) for the same vehicle speed or approximately the same vehicle speed and is evaluated in order to form a load characteristic variable (Xj), and **in that** the value and/or the change in the load distribution characteristic variables (Xj) in defined driving situations is used to calculate the load exerted on the tyres.

4. Method according to Claim 3, **characterized in that** in each case a quotient of the front wheel speed and the rear wheel speed of the wheels of the same vehicle side ($V_{VL}/V_{HL}$; $V_{VR}/V_{HR}$) is formed in order to determine the load distribution characteristic variables (Xj), and **in that** the value and/or the changes in the load distribution characteristic variables is/are evaluated for the same vehicle speed (vFZ) and/or taking into account at least one driving parameter such as, in particular, the vehicle speed.

5. Method according to Claim 4, **characterized in that** in each case the speeds of the wheels of one axle ($V_{VL}/V_{VR}$; $V_{HL}/V_{HR}$) are compared and evaluated in order to detect changes in relative load distribution perpendicularly with respect to the direction of travel.

6. Method according to Claim 4, **characterized in that** the speed and/or the tyre pressure and/or the wheel torque are taken into account as driving parameters.

**7.** Method according to one or more of Claims 1 to 6, **characterized in that**, in defined driving situations such as in the case of at least approximately free rolling wheels or taking into account the driving torque, by means of statistical observations and/or by evaluating criteria which indicate a partial load operating mode, the values which are applicable for the partial load operating mode are determined for the load distribution characteristic variables.

**8.** Method according to at least one of Claims 1 to 7, **characterized in that**, at the time at which a normal state, i.e. a defined state or setpoint state, is present is determined by manually or automatically triggering a starting signal, for example after the setting of a predefined air pressure and load state.

**9.** Method according to at least one of Claims 4 to 8, **characterized in that** values for the load distribution characteristic variables and the associated tyre pressure values are learnt and stored during predefined driving states such as straight-ahead travel, freely rolling wheels etc..

**10.** Method according to Claim 2, **characterized in that** the system which is based on evaluation of the wheel speed information learns the setpoint state or normal state in a learning phase, in particular by determining and storing variables which represent the rolling circumference of the wheels.

**11.** Method according to Claim 10, **characterized in that** variables which represent the rolling circumference of the wheels are ratio variables of different wheel pairings.

**12.** Method according to Claim 10 or 11, **characterized in that** the system which is based on evaluation of the wheel speed information determines, after the learning phase, changes in the variables which represent the rolling circumference of the wheels, by comparing current characteristic variables, which represent the rolling circumference of the wheels, with learnt variables which represent the rolling circumference of the wheels.

**13.** Method according to Claim 12, **characterized in that** the difference between the learnt variable and the current variable is a measure of the wheel load.

**14.** Method according to Claim 2, **characterized in that** the system which is based on evaluation of the wheel speed information is a complete DDS system which detects a loss in tyre pressure independently of the pressure-measuring system (TPMS).

**15.** Method according to Claim 14, **characterized in that** a comparison of the loss of tyre pressure which has been determined with the pressure sensor system (TPMS), with the loss of tyre pressure which has been determined on the basis of the DDS system, is carried out and evaluated.

**16.** Method according to Claim 14 or 15, **characterized in that** spring compression which is triggered by an increase in the wheel load is detected if the loss of tyre pressure which is determined on the basis of the wheel speed information is greater by a specific degree than the loss of tyre pressure which is determined on the basis of the pressure sensors(TPMS).

**17.** Method according to Claim 1 or 3, **characterized in that** the tyre pressure of the tyres is monitored in addition to the determination of the load exerted on the tyres, wherein a loss of pressure is inferred from the tyre pressure and the load distribution characteristic variables.

**Revendications**

**1.** Procédé pour déterminer le taux d'utilisation ou la charge d'un pneumatique de véhicule automobile, dans lequel on détermine, pendant l'utilisation du véhicule, la pression dans les divers pneumatiques (pi), **caractérisé en ce que**

- on observe l'évolution de la vitesse de rotation (ni) des différentes roues,
- par comparaison de l'évolution de la vitesse de rotation et/ou des variations de l'évolution de la vitesse de rotation des diverses roues dans des situations de roulage déterminées en tenant compte de grandeurs préréglées et/ou apprises, on détermine des paramètres de répartition de charge (Xj), qui sont des quotients à partir de vitesses de rotation des roues ou de vitesses des roues, et
- on déduit finalement le taux d'utilisation ou la charge des pneumatiques à partir de la pression des pneumatiques (pi), des paramètres de répartition de charge (Xj) et des valeurs de consigne ou des valeurs normales des paramètres de répartition de charge (Xj, cons) valables pour un taux d'utilisation déterminé ou une charge déterminée, par exemple à charge partielle ou à pleine charge, qui sont introduites manuellement ou qui, dès que des conditions prédéterminées sont remplies, sont reconnues automatiquement.

**2.** Procédé selon la revendication 1, **caractérisé en ce que** l'on utilise pour la détermination de la pression des pneumatiques (pi) un système de mesure de pression (TPMS) basé sur des capteurs de pression, pour l'observation de l'évolution de la vitesse de rotation des roues (ni) des détecteurs de la vitesse de rotation ainsi que pour la détermination des paramètres de répartition de charge (Xj) un système basé sur l'analyse des informations relatives à la vitesse de rotation des roues qui, au niveau du mode de fonctionnement, ressemble à un système DDS (DDS) pour la détermination des rapports des circonférences de roulement dynamiques des pneumatiques individuels.

**3.** Procédé selon la revendication 1 ou 2, **caractérisé en ce que** l'on compare la vitesse de rotation d'une roue avant (n_VL, n_VR) avec la vitesse de rotation d'une roue arrière (n_HL, n_HR) pour une vitesse du véhicule identique ou une vitesse du véhicule pratiquement identique et on les analyse pour former un paramètre de répartition de charge (Xj), et **en ce que** l'on utilise la valeur et/ou la variation des paramètres de répartition de charge (Xj) dans des situations de roulage déterminées pour calculer le taux d'utilisation ou la charge des pneumatiques.

**4.** Procédé selon la revendication 3, **caractérisé en ce que**, pour déterminer les paramètres de répartition de charge (Xj), on forme respectivement un quotient entre les vitesses de rotation de la roue avant et de la roue arrière du même côté du véhicule ($V_{VL}/V_{HL}$; $V_{VR}/V_{HR}$) et **en ce que** l'on analyse la valeur et/ou les variations des paramètres de répartition de charge pour une même vitesse du véhicule (vFZ) ou en tenant compte d'au moins un paramètre de roulage, comme notamment la vitesse du véhicule.

**5.** Procédé selon la revendication 4, **caractérisé en ce que**, pour reconnaître des variations relatives de la répartition de charge perpendiculairement à la direction de déplacement, on compare et on évalue chaque fois les vitesses de rotation des roues d'un essieu ($V_{VL}/V_{VR}$; $V_{HL}/V_{HR}$).

**6.** Procédé selon la revendication 4, **caractérisé en ce que** l'on tient compte, comme paramètre de roulage, de la vitesse et/ou de la pression des pneumatiques et/ou du couple aux roues.

**7.** Procédé selon une ou plusieurs des revendications 1 à 6, **caractérisé en ce que**, dans des situations de roulage définies, par exemple avec des roues roulant au moins presque librement ou en tenant compte du couple d'entraînement, on détermine par des considérations statistiques et/ou par l'évaluation de critères, qui renvoient à un fonctionnement à charge partielle, les valeurs des paramètres de répartition de charge valables pour le fonctionnement à charge partielle.

**8.** Procédé selon au moins l'une des revendications 1 à 7, **caractérisé en ce que** l'on fixe l'instant auquel prévaut un état normal, c'est-à-dire un état défini ou un état de consigne, par l'émission manuelle ou automatique d'un signal de démarrage, par exemple après le réglage d'une pression d'air prédéterminée et d'un état de charge prédéterminé.

**9.** Procédé selon au moins l'une des revendications 4 à 8, **caractérisé en ce que** l'on apprend et on mémorise des valeurs des paramètres de répartition de charge et les valeurs de pression des pneumatiques correspondantes pendant des états de roulage prédéterminés, comme un déplacement en ligne droite, des roues roulant librement, etc.

**10.** Procédé selon la revendication 2, **caractérisé en ce que** le système basé sur l'analyse des informations relatives à la vitesse de rotation des roues apprend, dans une phase d'apprentissage, l'état de consigne ou état normal, en particulier par la détermination et la mémorisation de grandeurs, qui représentent la circonférence de roulement des roues.

**11.** Procédé selon la revendication 10, **caractérisé en ce que** les grandeurs qui représentent la circonférence de roulement des roues sont des grandeurs relatives de différentes paires de roues.

**12.** Procédé selon la revendication 10 ou 11, **caractérisé en ce que** le système basé sur l'analyse des informations relatives à la vitesse de rotation des roues détermine, après la phase d'apprentissage, des variations des grandeurs qui représentent la circonférence de roulement des roues, par comparaison de paramètres actuels, qui représentent la circonférence de roulement des roues, avec des grandeurs apprises, qui représentent la circonférence de roulement des roues.

**13.** Procédé selon la revendication 12, **caractérisé en ce que** la différence entre la grandeur apprise et la grandeur réelle est une mesure de la charge de la roue.

**14.** Procédé selon la revendication 2, **caractérisé en ce que** le système basé sur l'analyse des informations relatives à la vitesse de rotation des roues est un système DDS complet, qui reconnaît une perte de pression des pneumatiques indépendamment du système de mesure de la pression (TPMS).

**15.** Procédé selon la revendication 14, **caractérisé en ce que** l'on effectue et on analyse une comparaison de la perte de pression des pneumatiques, qui a été déterminée par les capteurs de pression (TPMS), avec la perte de pression des pneumatiques qui a été déterminée sur la base du système DDS.

**16.** Procédé selon la revendication 14 ou 15, **caractérisé en ce que** l'on reconnaît, suite à un affaissement déclenché par une augmentation de la charge de roue, quand la perte de pression du pneumatique déterminée sur la base des informations relatives à la vitesse de rotation de la roue est supérieure d'une quantité déterminée à la perte de pression du pneumatique constatée sur la base des capteurs de pression (TPMS).

**17.** Procédé selon la revendication 1 ou 3, **caractérisé en ce que**, en plus de la détermination du taux d'utilisation ou de la charge des pneumatiques, on effectue une surveillance de la pression de gonflage des pneumatiques, dans lequel on déduit une perte de pression sur la base de la pression des pneumatiques et des paramètres de répartition de charge.

Eingangsgrößen:
Reifendrücke p$i$ und Raddrehzahlen n$i$ mit $i$ = VL, VR, HL, HR
optional: Taster für manuelles Zurücksetzen der gelernten Sollwerte X$j$,soll(v,p)
optional: Motormoment und -drehzahl, Gierrate, Querbeschleunigung über
Datenbussystem

1

↓

Zustandsüberwachung:
Reifendruck p$i$, Fahrzeuggeschwindigkeit v$Fz$ und
Fahrzeugbeschleunigung b$Fz$, Kurvenüberwachung;
Überwachung Reifenkräfte (Antreiben/Bremsen)

2

↓

nein ← Fahrzustand gültig? 3

↓ ja

Berechnung der Raddrehzahl-Kennwerte X$j$, z.B.:
XL = n_VL/n_HL,  XR = n_VR/n_HR,
XV = n_VL/n_VR,  XH = n_HL/n_HR

4

↓

nein, dann Lernen ← Sollwerte X$j$,soll(v,p) gelernt? → ja, dann Erkennen Reifenüberlastung

5

Vergleich der aktuellen X$j$ mit den
Sollwerten X$j$,soll(v,p),
ΔX$j$ = X$j$-X$j$,soll(v,p)
und statistische Auswertung von ΔX$j$

6

↓

7

Lernen der Sollwerte in Abhängigkeit von
v und p$i$: X$j$,soll(v,p)

8

ΔX$j$ > X$j$,schw? → ja → Warnlampe

↓ nein

↓

Ende

*Fig. 1*

Fig. 2

Fig. 3

Fig. 4

**EP 1 414 683 B1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 19807880 A1
- EP 0719663 A1
- DE 19611364 A1